Europäisches Patentamt

European Patent Office

Office européen des brevets

(19)

(11) Veröffentlichungsnummer: **0 002 717**
**B1**

(12) **EUROPÄISCHE PATENTSCHRIFT**

(45) Veröffentlichungstag der Patentschrift: **07.04.82**

(21) Anmeldenummer: **78101644.9**

(22) Anmeldetag: **12.12.78**

(51) Int. Cl.³: **B 29 B 3/00, C 08 F 6/00, C 08 G 69/00**

(54) **Verfahren zum Austragen von granulierten linearen Polymeren aus einer Behandlungszone.**

(30) Priorität: **15.12.77 DE 2755941**

(43) Veröffentlichungstag der Anmeldung:
**11.07.79 Patentblatt 79/14**

(45) Bekanntmachung des Hinweises auf die Patenterteilung:
**07.04.82 Patentblatt 82/14**

(84) Benannte Vertragsstaaten:
**BE CH DE FR GB IT NL**

(56) Entgegenhaltungen:
**FR - A - 1 561 316**
**US - E - 23 237**

(73) Patentinhaber: **BASF Aktiengesellschaft**
**Carl-Bosch-Strasse 38**
**D-6700 Ludwigshafen (DE)**

(72) Erfinder: **Hoerauf, Werner, Dr.**
**Homburger Strasse 10**
**D-6700 Ludwigshafen (DE)**
Erfinder: **Valentin, Guenter**
**Pfarrer-Friedrich-Strasse 30**
**D-6700 Ludwigshafen 29 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Verfahren zum Austragen von granulierten linearen Polymeren aus einer Behandlungszone

Polymere, wie Polyäthylenterephthalat, Polyamid-6,6 oder Polyamid-6 werden nach deren Herstellung in Form von Granulat bei Temperaturen von 30 bis 50°C unterhalb ihres Schmelzpunktes mit Inertgasen, die frei von molekularem Sauerstoff sind, behandelt, um einerseits das Granulat zu trocknen und andererseits eine Nachkondensation durchzuführen. Ein solches Verfahren wird beispielsweise in der CH—A—385 744 oder DE—A—25 30 304 beschrieben. Hierbei durchfließt das granulierte Polymere die Behandlungszone unter Einwirkung der Schwerkraft in Form einer Pfropfenströmung, wird im unteren Teil der Behandlungszone abgekühlt und über eine trichterförmige Austragszone ausgetragen. Beim Austragen des Granulats läßt es sich jedoch such unter Anwendung von Vorsichtsmaßnahmen nicht vermeiden, daß molekularer Sauerstoff aus der Luft in die Behandlungszone gelangt. Durch den eingedrungenen molekularen Sauerstoff wird das erhitzte Polymere geschädigt Selbst wenn nur geringe Anteile des Polymeren geschädigt werden, so liegen diese doch in Mischung mit nicht geschädigtem Polymeren vor und vermindern die Qualität insgesamt. Dies gilt umso mehr als bei Polymeren für die Herstellung von Fäden außerordentlich hohe Qualitätsansprüche gestellt werden. Um das Eindringen von Sauerstoff aus der umgebenden Luft durch die Austragsöffnung bei der Granulatausschleusung zu vermeiden, ist es notwendig, das Granulat zunächst in ein mit Stickstoff bespültes Ausschleusgefäß zu leiten, nach dessen Füllung das Ausschleusgefäß gegen die Behandlungskammer abzutrennen und dann das Granulat aus dem Ausschleusgefäß auszutragen. Eine solche Arbeitsweise ist sehr aufwendig.

Es war deshalb die technische Aufgabe gestellt, das Austragen von granulierten Polymeren aus solchen Behandlungszonen so zu gestalten, daß eine Schädigung durch eindringenden molekularen Sauerstoff ausgeschlossen wird.

Diese Aufgabe wird gelöst in einem Verfahren zum Austragen von granulierten organischen Polymeren, die bei erhöhter Temperatur gegen molekularen Sauerstoff empfindlich sind, aus einer Behandlungszone, in der das Polymere kontinuierlich bei Temperaturen über 70°C mit Inertgasen, die frei von molekularem Sauerstoff sind, behandelt und anschließend abgekühlt wird, wobei man das granulierte Polymere bei einer Temperatur ≦50°C durch eine enge langgestreckte rohrförmige Austragzone, wobei der Durchmesser der Austragszone mindestens das 4-fache des Granulatdurchmessers und maximal das 0,07-fache des Durchmessers der jeweiligen Behandlungszone beträgt und die Länge der Austragszone das 50- bis 100-fache ihres Durchmessers beträgt, entnimmt, mit der Maßgabe, daß die Austragszone stets völlig mit granuliertem Polymeren gefüllt ist.

Das neue Verfahren hat den Vorteil, daß das Eindringen von molekularem Sauerstoff aus der umgebenden Luft in die Behandlungszone und somit eine Schädigung des heißen Polymeren vermieden wird. Ferner hat das neue Verfahren den Vorteil, daß keine aufwendigen Absperrorgane und sonstige Vorkehrungen notwendig sind, um den Ausschluß von molekularem Sauerstoff zu gewährleisten. Darüber hinaus hat das neue Verfahren den Vorteil, daß es sich auf einfache Weise automatisieren läßt.

Bevorzugte organische Polymere sind Polyester, insbesondere solche, die sich von Alkandicarbonsäuren mit 4 bis 10 Kohlenstoffatomen oder Benzol oder Naphthalindicarbonsäuren sowie Alkandiolen mit 2 bis 6 Kohlenstoffatomen und/oder polymeren Alkandiolen mit einem Molekulargewicht bis zu 6 000 ableiten. Ferner sind bevorzugte Polymere Polyamide, insbesondere solche, die sich von Alkandicarbonsäuren mit 6 bis 12 Kohlenstoffatomen und Alkandiaminen mit 6 bis 12 Kohlenstoffatomen oder aromatischen Diaminen ableiten. Ferner sind bevorzugte Polymere Polylactame, die sich von Lactamen mit 6 bis 12 Kohlenstoffatomen ableiten. Geeignete Polymere sind beispielsweise Polyäthylenterephthalat, Polybutylenterphthalat sowie deren Copolymere untereinander oder mit anderen polykondensierbaran Dicarbonsäuren und Diolen, beispielsweise segmentierte Copolyätherester, Polycaprolactam, Polyaurinlactam, Polyamid-6,6 oder Polyamid-6,10.

Besondere technische Bedeutung hat das Verfahren erlangt für Polyamide wie Polyamid-6,6, insbesondere jedoch für Polycaprolactam. Im allgemeinen liegt das Granulat in Abmessungen von 1 bis 5 mm Länge und 1 bis 5 mm Durchmesser vor.

Das granulierte Polymere durchströmt eine vorzugsweise vertikale Behandlungszone in einer Pfropfenströmung in kontinuierlicher Weise. Hierbei wird das Granulat mit Inertgasen bei Temperaturen über 70°C, beispielsweise bei Copolycaprolatam bis 200°C, bei anderen Granulaten 10 bis 100°C unterhalb des Erweichungspunktes des jeweiligen Polymeren, behandelt. Geeignete Inertgase sind beispielsweise Stickstoff. Sie müssen frei von molekularem Sauerstoff sein, d.h. sie sollen einen Sauerstoffgehalt von <2 ppm haben. Im unteren Teil der Behandlungszone wird das Polymere auf eine Temperatur ≦50°C gekühlt und in einem Konus gesammelt.

Vorteilhaft ist der Konus stets nur teilweise gefüllt. Geeignete Arbeitsweisen werden beispielsweise beschrieben in CH—A 385 744 oder DE—A 25 30 304.

Erfindungsgemäß trägt man das granulierte Polymere aus dem Konus der Behandlungszone über eine enge langgestreckte rohrförmige Austragszone aus. Die Temperatur des Granulats beträgt hierbei ≦50°C. Der Durchmesser der Austragszone beträgt mindestens das 4-fache des Granulatdurchmessers, um eine Brückenbildung zu vermeiden und maximal das 0,07-fache des Durchmessers der Jeweiligen Behandlungszone, vorzugsweise mindestens das 10-fache des Granulatdurchmessers und maximal das 0,03-fache des Durchmessers der Behandlungszone. Geeignete Austragszonen haben beispielsweise einen Durchmesser von 32 bis 70 mm. Die Länge der Austragszone beträgt das 50- bis 100-fache ihres Durchmessers. In der Technik beträgt die Länge einer solchen Austragszone z.B. 5 bis 10 m. Vorteilhaft ist die Länge der Austragszone so bemessen, daß deren Füllung den erhöhten Druck in der Behandlungszone, z.B. von 98,06 m bar (1 000 mm Wassersäule), gegenüber dem atomsphärischen Druck ausgleicht. Demzufolge ist es ein wesentliches Merkmal der Erfindung, daß die langgestreckte Austragszone stets mit granuliertem Polymeren gefüllt ist. Um eine vollständige Füllung zu erreichen, versteht es sich, daß die langgestreckte Austragszone vorzugsweise im wesentlichen vertikal angeordnet ist.

Am unteren Ende der Austragszone wird das austretende Granulat kontinuierlich oder absatzweise durch übliche Förderorgane abgezogen, z.B. durch eine Schüttelrinne, einem Förderband oder vorzugsweise durch eine pneumatische Fordereinrichtung. Ein Vorteil des Verfahrens liegt auch darin, daß ohne das Granulat zu schädigen, Luft als Fördermittel verwendet werden kann. Ein weiterer Abschluß gegenüber der Behandlungszone erübrigt sich durch die erfindungsgemäße Arbeitsweise.

In einer bevorzugten technischen Ausführung wird durch eine Minimum- und Maximumanzeige der Standhöhe desgranulierten Polymeren im Ausgangskonus der Behandlungszone die Fördereinrichtung am unteren Ende der langgestreckten Austragszone betätigt und somit sichergestellt, daß die Austragszone stets gefüllt bleibt und ein Austrag ohne weitere Bedingungsmaßnahmen ermöglicht wird.

Obzwar die tatsächliche Wirkungsweise nicht bekannt ist, wird davon ausgegangen, daß durch die bei erhöhter Temperatur durchgeführte Behandlung mit sauerstofffreiem Stickstoff der Sauerstoffgehalt von der Granulatoberfläche desorbiert wird. Beim Austrag durch die langgestreckte Austragszone absorbiert nun das abgekühlte Granulat aus der vom Ende der Austragszone eindringenden Luft molekularen Sauerstoff, ohne das Granulat zu schädigen an der Oberfläche so vollständig, daß das in der Behandlungszone auf hoher Temperatur befindliche Granulat vor Schädigung durch Sauerstoff geschützt ist. Eine Absorption des Sauerstoffs aus der umgebenden Luft würde am kalten Granulat auf jeden Fall bei der Abfüllung eintreten.

Das Verfahren nach der Erfindung eignet sich zum Austrag von granulierten Polymeren aus Trocknungszonen, wei sie beispielsweise zum Trocknen von granuliertem Granulat angewandt werden oder zum Austrag von granuliertem Polymeren aus Zonen für die Feststoffkondensation, wie sie beispielsweise zur Herstellung von hochmolekularen Polyamiden angewandt werden. Das Verfahren nach der Erfindung sei an folgendem Beispiel veranschaulicht.

Beispiel

In einem senkrechten Behälter (Höhe 22 m, lichte Weite 2 ml) wird Polycaprolactamgranulat von 2,5 mm Durchmesser und 2,7 mm Länge kontinuierlich durch Schwerkraft von oben nach unten bewegt und hierbei mit Stickstoff (O₂-Gehalt <2 ppm) auf 160°C erhitzt.

Im unteren Viertel des Behälters wird das Granulat auf 50°C gekühlt, im Konus des Behälters gesammelt und über ein 7 m langes und 70 mm weites senkrecht angeordnetes Rohr der Düse einer Luft-Förderanlage zugeführt. Über einen Maximum- und Minimum-Kontakt im Konus des Turmes wird die Förderluft an- und abgestellt. Die Austragsleistung beträgt 3 t Granulat pro Stunde. Eine Sauerstoff-Schädigung des heißen Granulats im Behälter tritt nicht ein.

**Patentansprüche**

1. Verfahren zum Austragen von granulierten organischen Polymeren, die bei erhöhter Temperatur gegen molekularen Sauerstoff empfindlich sind, aus einer Behandlungszone, in der das Polymere kontinuierlich bei Temperaturen über 70°C mit Inertgasen, die frei von molekularem Sauerstoff sind, behandelt und anschließend abgekühlt wird, dadurch gekennzeichnet, daß man das Polymere bei einer Temperatur ≦50°C durch eine enge langgestreckte rohrförmige Austragszone, wobei der Durchmesser der Austragszone mindestens das 4-fache des Granulatdurchmessers und maximal das 0,07-fache des Durchmessers der jeweiligen Behandlungszone beträgt und die Länge der Austragszone das 50- bis 100-fache ihres Durchmessers beträgt, entnimmt mit der Maßgabe, daß die Austragszone stets mit granuliertem Polymeren vollständig gefüllt ist.

2. Verfahren nach Anspruch 1, dadurch gekennzeichnet, daß man Polyamid verwendet.

**Claims**

1. A process for discharging granular organic polymers, which are sensitive to molecular oxygen at elevated temperatures, from a treatment zone in which the polymer has been continuously treated, at above 70°C, with inert gases which are free from molecular oxygen, and has subsequently been cooled, characterized in that the polymer is withdrawn at ≤50°C through a narrow elongate tubular discharge zone, the diameter of the discharge zone being at least 4 times the granule diameter and at most 0.07 times the diameter of the particular treatment zone, and the length of the discharge zone being from 50 to 100 times its diameter, with the proviso that the discharge zone is always completely filled with granular polymer.

2. A process as claimed in claim 1, characterized in that a nylon is used.

## Revendications

1. Procédé pour décharger des polymères organiques granulés qui, aux températures accrues, sont sensibles à l'oxygène moléculaire, d'une zone de traitement, dans laquelle le polymère est traité en continu et à une température supérieure à 70°C par des gaz inertes exempts d'oxygène moléculaire, puis refroidi, caractérisé en ce que le polymère est déchargé à une température inférieure ou égale à 50°C à travers une zone d'évacuation tubulaire oblongue, dont le diamètre correspond à au moins 4 fois le diamètre des granules et au plus à 0,07 fois le diamètre de la zone de traitement et dont la longueur est égale à 50 à 100 fois son diamètre, la zone d'évacuation devant en permanence être remplie entièrement de polymère granulé.

2. Procédé suivant la revendication 1, caractérisé en ce que le polymère est un polyamide.